# EUROPEAN PATENT SPECIFICATION

(11) **EP 1 121 262 B1**
(45) Date of publication and mention of the grant of the patent: **22.11.2006**
(21) Application number: 99922324.1
(22) Date of filing: 14.05.1999
(51) Int. Cl.: B60W 30/18, B60W 30/14, B60K 26/02

(54) **MOTOR VEHICLE MAXIMUM SPEED CONTROL**
VORRICHTUNG UND VERFAHREN ZUR FAHRGESCHWINDIGKEITSBEGRENZUNG EINES KRAFTFAHRZEUGES
REGULATION DE LA VITESSE MAXIMALE D'UN VEHICULE AUTOMOBILE

(30) Priority: 20.07.1998 GB 9815597
(43) Date of publication of application: 08.08.2001
(73) Proprietor: Ford Global Technologies, LLC., Dearborn, MI 48126 (US); JAGUAR CARS LIMITED, Allesley Coventry CV5 9DR West Midlands (GB)
(72) Inventor: WATTS, Daniel, Coventry CV5 8FY (GB); SHELTON, Richard Dennis, Coventry CV2 2HQ (GB); HERBERT, Martin John Devonald, Great Waltham, Essex CM3 1DX (GB)
(74) Representative: Gicquel, Olivier Yves Gérard
(86) International application number: PCT/GB1999/001549
(87) International publication number: WO 2000/005093

(56) References cited:
- DE-A- 2 532 008
- DE-A- 4 305 737
- FR-A- 2 728 837
- FR-A- 2 755 650
- US-A- 4 505 151
- US-A- 4 615 409
- US-A- 5 514 049
- PATENT ABSTRACTS OF JAPAN vol. 098, no. 012, 31 October 1998 (1998-10-31) & JP 10 184396 A (FUJI HEAVY IND LTD), 14 July 1998 (1998-07-14)

## Description

The present invention relates to an apparatus for controlling the maximum speed of a motor vehicle.

A driver often aims to maintain an even speed, for example on extended journeys on a highway, in order to maximise fuel economy and minimise travel time. At the same time, most drivers also want to avoid exceeding the speed limit, but it is well known that many drivers' speed creeps up above a speed limit, particularly to avoid running in close proximity to other vehicles for long periods. Some drivers then find it difficult to reduce speed because of a perception after reducing speed to the speed limit that the vehicle is travelling slower than it had been before speed was increased.

Many drivers would therefore welcome a system that would help reduce the possibility or temptation of exceeding a speed limit. One reason that speed tends to creep up on long journeys is that it is difficult to maintain a precise accelerator pedal setting depending on the road gradient. Even a small movement in the pedal, or change in gradient can result in a significant change in speed within a minute or so. Some drivers use conventional cruise control systems in order to set a minimum speed during a journey. This however, can be inconvenient in situations where a driver must regularly slow down, because with conventional cruise control, touching the brake or clutch causes the cruise control to shut off instantly. The cruise control must then be manually reset.

Another approach to helping a driver control speed is disclosed in patent document DE 43 05 737 A1. This document is concerned with the problem of speed changing gradually over time owing to a slight change in an accelerator pedal setting. The proposed solution is to provide an accelerator pedal system having three operating regions: a first region for use at slow speeds in which the pedal may be depressed with a relative low force; beyond this a relatively narrower second region in which a desired set speed does not change even though the accelerator pedal is depressed with continually increasing force equal at least to the weight of a typical foot ; and beyond this a third region in which the desired set speed may be exceeded by depressing the pedal with a force increasingly greater than the maximum force in the second region.

There are some disadvantages with this prior art approach to controlling the speed of a motor vehicle about a set desired speed. First, the system requires a relatively complicated return spring biasing for the accelerator pedal, with at least three regions in which not only does the return force vary with pedal position, but so also does the rate of change of the return force. In practice, this would require either a complicated spring mechanism, or a motorized return actuator controlled with active feedback according to the road speed. Second, it can be disconcerting to a driver for an accelerator pedal to have so many differing regions of pressure response. For example, it might not be possible to move the pedal smoothly from the first region through to the second region.

FR-A-2 755 650 discloses a throttle control apparatus as described in the preamble of Claim 1 which addresses some of the limitations mentioned above.

The aim of the invention is to improve the throttle control apparatus known from FR-A-2 755 650.

Accordingly, the invention provides a throttle control apparatus for a motor vehicle, comprising: an accelerator pedal which may be activated by a driver's foot to travel between an idle position and a floored position, the accelerator pedal having a first region of travel from the idle position followed by a second region of travel towards the floored position; spring biasing means that biases an activated pedal to return to an idle position, said means providing a step increase in the biasing from the first region to the second region; speed setting means by which a driver may set a maximum desired vehicle speed; and driver demand means for generating a driver demand signal from the pedal position, the driver demand signal increasing according to pedal position in both the first and second regions; the driver demand means is arranged to associate a maximum desired speed with a set pedal position within the first region, and once a driver sets a maximum desired vehicle speed, the driver demand means is insensitive to any change in pedal position in the first region from the set pedal position up to the second region, characterised in that the spring biasing means is active, and in that the step increase in biasing is present only when the speed setting means is used to set a maximum desired speed. Then, if the speed setting means is switched off, the driver is not presented with a step change in pedal biasing.

So that the driver demand behaves normally whenever the speed setting means is not set, it is preferred if the driver demand means is not insensitive in the first region when the speed setting means not set. Just as the insensitive pedal travel region can be implemented in software, for example in a driver demand controller or an engine management control system, so can the feature of disabling the insensitive region.

The throttle operates conventionally up to the set speed, but then an electronic governor stops further throttle opening from increasing the speed. If the vehicle then begins to climb a hill, the throttle opening necessary to maintain the set speed will increase, but, so long as the throttle opening at the step is sufficient, the set speed will be maintained for as long as the driver holds his foot at the step position.

The term "step increase" in the biasing means either a sudden change in the level of the biasing, or a sudden change in the rate of change of biasing, of a degree which will be readily apparent to the driver through the resistance to pedal movement. The biasing loads to achieve this "feel" will be superimposed over the normal throttle characteristic and therefore will probably exceed the weight of the driver's foot.

Preferably, the driver demand means is completely insensitive or dead for pedal positions from the set pedal position up to the second region.

The driver demand means may be a driver demand controller, or an electronic engine management system separate from or incorporating the driver demand controller, or any other electronic arrangement that serves the purpose of setting a driver demand signal to control the engine.

A driver may therefore set a desired maximum speed, for example by setting numbers on a digital display, or by pressing a button once the maximum speed has been attained. The driver demand means will then be insensitive to any change in pedal position in an upper portion of the first region, so that a driver may keep the pedal somewhere between the set position and second region. Alternatively the driver may use the step increase in pedal resistance between the first and second regions as a convenient pedal setting permitting him to rest his foot on the pedal, particularly if the pedal biasing at the start of the second region is sufficiently strong to support the weight of a typical foot.

Other convenient features can also be implemented in software. For example, the driver demand means may temporarily be made is not insensitive in the first region when the speed setting means is set and when the pedal position has been moved from the first region to the second region and then back into the first region. The insensitive region may then automatically be re-established at such a time as when the pedal position has been returned to or below the set pedal position.

If a maximum speed has been set and the driver demand is increased from the step into the second region, the maximum speed setting should be disabled until the throttle setting has first been reduced to below the throttle position needed to maintain the set speed, and then re-enabled.

When incorporated in a motor vehicle, it will be most convenient if the driver demand signal associated with the change between the first and second regions corresponds with a typical maximum expected highway speed, for example 130 km/h, or higher. Then the maximum desired speed may be set at up to this speed.

If the motor vehicle has an automatic transmission, and means by which the transmission may be made to kick down a gear upon a sufficiently high driver demand, then pedal positions associated with driver demand signals sufficient to cause the transmission to kick down may lie in the second region. This may be necessary to provide sufficient torque, for example, when overtaking or climbing a steep hill.

Similarly, if the motor vehicle has a catalytic converter, means to control cylinder air-fuel ratio, and means by which the air-fuel ratio may be changed from stoichiometric to rich upon a sufficiently high driver demand, then pedal positions associated with driver demand signals sufficient to cause the air fuel ratio to go rich may lie in the second region. This may be necessary, for example, to prevent a catalytic converter overheating during high engine demand.

The advantage of automatic kick down and the switch to rich operating lying in the second region of pedal travel, is that the driver will feel through his foot when he is pressing the pedal into the second region, and therefore be forewarned that the engine operation is reaching a demanding level. This can be useful in helping a driver to minimise such demanding operation, and hence improving fuel economy and exhaust emissions.

The invention will now be described by way of example, with reference to the accompanying drawings, in which:
Figure1 is a schematic drawing of a throttle control apparatus according to the invention, showing an accelerator pedal having a first and second region of travel ; and
Figure 2 is a plot of pedal force F against pedal position P, showing the two travel regions and a speed set point P_{S}, rich operation point P_{λ} and transmission kick down point P_{K}.

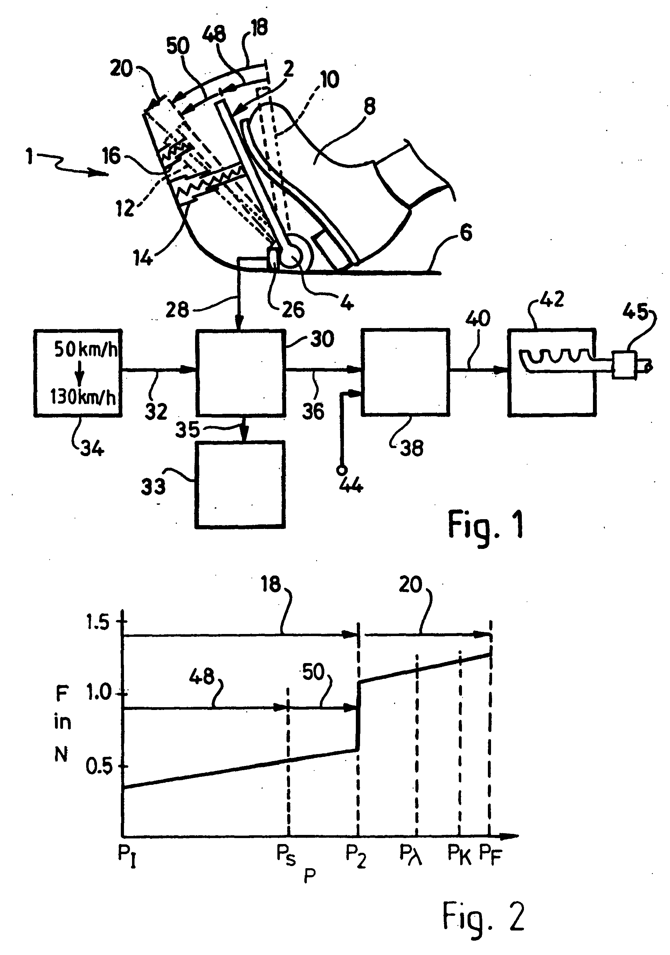

Figure 1 shows schematically a throttle control apparatus 1 having an accelerator pedal 2 pivotably attached 4 to the floor 6 of a motor vehicle (not shown). The pedal may be activated by a driver's foot 8 to travel between an idle position 10 to a floored, or maximum, position 12.

The pedal action can be accomplished in a variety of different ways. In one possible arrangement, when the pedal 2 is first depressed by the foot 8, it is spring biased by a first spring means 14 back towards the idle position 10. If the pedal is depressed further, a second spring biasing means 16 (which could be a gas strut) then acts together with the first spring biasing means 14 to apply a further bias back towards the idle position 10. The driver's foot 8 therefore experiences a first pressure over a first region of pedal travel 18, followed by a higher second pressure over a second, shorter region of pedal travel 20.

Alternatively, two torsion springs can be used with one of them being pre-tensioned to cause the step. The two springs would then act together above point P₂, (see Figure 2).

The accelerator pedal pivot 4 incorporates an electronic movement sensor 26 that is connected 28 to a driver demand controller 30. The accelerator pedal arrangement is therefore of the drive-by-wire type. Also connected 32 to the demand controller 30 is a means for setting a maximum desired vehicle speed 34, here, settable between 50 km/h and 130 km/h. Optionally, the driver demand controller 30 may be connected 35 to an automatic transmission 33. The driver demand controller 30 has an output 36 that is used by an electronic engine management system (EEMS) 38 to control 40 in a known way an internal combustion engine 42.

The EEMS output 40 may include means by which the air-fuel ratio may be controlled, again in a known manner. The engine management system will normally have a number of other inputs 44, for example from an engine speed sensor, coolant temperature sensor, exhaust gas sensor, and drive shaft speed sensor.

Referring now also to Figure 2, which shows a plot of force F against position P, the two spring biasing means14, 16 each have a spring constant that defines a linear relationship between the force F applied by the driver's foot 8 on the pedal 2, and the pedal position P. When the foot 8 is off the pedal, the pedal is at P_{I}, the idle position 10. When the pedal is in the floored position 12, the pedal is at a point P_{F}.

The boundary between the first pedal travel region 18 in which the pedal is subject only to the first spring biasing means 14 and the second pedal travel region 20 in which the pedal is subject to both the first 14 and second 16 spring biasing means is at a point P₂.

When the driver sets a maximum desired speed with the means 34, the driver demand controller 30 then associates a pedal position at point P_{S} with the set maximum speed. Preferably, point P₂, or a point just to the left of P₂, corresponds to the maximum allowable desired speed that a driver may set, for example 130 km/h, or some other speed limit as set by national law. Point P_{S} is therefore within an upper portion the first pedal travel region 18.

When a driver accelerates up to and beyond point P_{S}, the driver demand controller 30 is then programmed to treat any pedal position in excess of point P_{S} up to the boundary point P₂ the same as point P_{S}. The driver demand controller 30 therefore is sensitive to pedal movement in a first sub-region 48 of the first region 18, and thereafter is insensitive to pedal movement in a second sub-region 50 of the first region 18.

The step change in the force F at point P₂ is sufficient for a driver to rest his foot upon pedal, without the pedal moving appreciably beyond point P₂. This can be convenient during long journeys. If the driver presses the pedal appreciably beyond point P₂, then the driver demand controller 30 responds to the change by disabling the insensitive sub-region 50, and by sending an increased driver demand signal to the EEMS 38. If the driver then drops back down below P₂, the insensitive sub-region 50 remains disabled, until such time as the pedal drops below point P_{S}, whereupon the system reverts to its initial state with the maximum desired speed point P_{S} again enabled.

If the driver presses the accelerator pedal 2 significantly into the second region 20, then the driver demand controller may get to a point P_{λ} where it is necessary for the EEMS 38 to set a rich air-fuel mixture, in order to prevent overheating of a catalytic converter 45. The driver demand controller may also get to a point P_{K}, where the automatic transmission 33 receives from the driver demand controller 30 or EEMS 38 a kick-down signal. Because the driver will always feel a step change in pressure at point P₂, he is forewarned that he is placing a high demand on the engine 42, and may if he so wishes restrict the depression of the pedal so as to avoid getting to point P_{λ} or P_{K}.

The throttle control apparatus described above provides a number of convenient features to help a driver keep at or below a maximum desired vehicle speed. If a driver needs to exceed the previously set maximum desired speed, he may do so simply by pressing the pedal further. Although it is suitable for drive-by-wire systems, in principle the invention could also be used with pedal systems employing a mechanical linkage to a throttle.

## Claims

1. A throttle control apparatus (1) for a motor vehicle, comprising: an accelerator pedal (2) which may be activated by a driver's foot (8) to travel between an idle position (10) and a floored position (12), the accelerator pedal (2) having a first region of travel (18) from the idle position (10) followed by a second region of travel (20) towards the floored position (12); spring biasing means (14, 16) that biases an activated pedal (2) to return to an idle position (10), said means (14, 16) providing a step increase in the biasing from the first region (18) to the second region (20); speed setting means (34) by which a driver may set a maximum desired vehicle speed; and driver demand means (30) for generating a driver demand signal from the pedal position, the driver demand signal increasing according to pedal position in both the first and second regions (18,20); the driver demand means (30) is arranged to associate a maximum desired speed with a set pedal position (P_{S}) within the first region (18), and once a driver sets a maximum desired vehicle speed, the driver demand means (30) is insensitive to any change in pedal position in the first region (18) from the set pedal position (P_{S}) up to the second region (20), **characterised in that** the spring biasing means (14, 16) is active, and **in that** the step increase in biasing is present only when the speed setting means (34) is used to set a maximum desired speed.

2. A throttle control apparatus (1) as claimed in Claim 1, in which the driver demand means (30) is dead to any change in pedal position from the set pedal position (P_{S}) up to the second region (20).

3. A throttle control apparatus (1) as claimed in Claim 1 or Claim 2, in which the driver demand means (30) is not insensitive in the first region (18) when the speed setting means (34) is not set.

4. A throttle control apparatus (1) as claimed in any preceding claim, in which the driver demand means (30) temporarily is not insensitive in the first region (18) when the speed setting means (34) is set and when the pedal position has been moved from the first region (18) to the second region (20) and then back into the first region (18), until such time as the pedal position has been returned to or below the set pedal position(P_{S}).

5. A motor vehicle, comprising a throttle control apparatus (1), said apparatus (1) being as claimed in any preceding claim.

6. A motor vehicle as claimed in Claim 5 when dependent on Claim 4, in which the driver demand signal associated with the change between the first and second regions (18, 20) corresponds with a typical highway speed.

7. A motor vehicle as claimed in Claim 5 or Claim 6, having an automatic transmission (33), and means (30) by which the transmission may be made to kick down a gear upon a sufficiently high driver demand, in which pedal positions (P_{K}) associated with driver demand signals sufficient to cause the transmission (33) to kick down lie in the second region (20).

8. A motor vehicle as claimed in any one of Claims 5 to 7, having a catalytic converter (45), means (38) to control cylinder air-fuel ratio, and means by which the air-fuel ratio may be changed from stoichiometric to rich upon a sufficiently high driver demand, in which pedal positions (P_{λ}) associated with driver demand signals sufficient to cause the air fuel ratio to go rich lie in the second region (20).

## Patentansprüche

1. Drosselklappensteuerungsvorrichtung (1) für ein Kraftfahrzeug, die folgendes umfaßt: ein Gaspedal (2), das durch den Fuß (8) eines Fahrers aktiviert werden kann, um sich zwischen einer Leerlaufposition (10) und einer durchgetretenen Position (12) zu bewegen, wobei das Gaspedal (2) aus der Leerlaufposition (10) heraus einen ersten Bewegungsbereich (18) mit einem sich daran anschließenden zweiten Bewegungsbereich (20) hin zur durchgetretenen Position (12) hat; ein Federvorspannmittel (14, 16), das ein aktiviertes Pedal (2) vorspannt, um es in eine Leerlaufposition (10) zurückzuführen, wobei das Mittel (14, 16) eine Stufenerhöhung der Vorspannung vom ersten Bereich (18) zum zweiten Bereich (20) bereitstellt; ein Geschwindigkeitseinstellmittel (34), mit dem ein Fahrer eine maximale gewünschte Fahrzeuggeschwindigkeit einstellen kann; sowie ein Fahreranforderungsmittel (30), um ein Fahreranforderungssignal über die Pedalposition zu erzeugen, wobei das Fahreranforderungssignal gemäß der Pedalposition sowohl im ersten als auch im zweiten Bereich (18, 20) zunimmt, wobei das Fahreranforderungsmittel (30) vorgesehen ist, um eine maximale gewünschte Geschwindigkeit einer eingestellten Pedalposition (P_{S}) innerhalb des ersten Bereichs (18) zuzuordnen, wobei das Fahreranforderungsmittel (30), sobald ein Fahrer eine maximale gewünschte Fahrzeuggeschwindigkeit eingestellt hat, gegenüber einer beliebigen Änderung der Pedalposition im ersten Bereich (18) von der eingestellten Pedalposition (P_{S}) bis zum zweiten Bereich (20) unempfindlich ist, **dadurch gekennzeichnet, daß** das Federvorspannmittel (14, 16) aktiv ist und daß die Stufenerhöhung der Vorspannung nur dann vorliegt, wenn das Geschwindigkeitseinstellmittel (34) verwendet wird, um eine maximale gewünschte Geschwindigkeit einzustellen.

2. Drosselklappensteuerungsvorrichtung (1) nach Anspruch 1, bei der das Fahreranforderungsmittel (30) gegenüber einer beliebigen Änderung der Pedalposition von der eingestellten Pedalposition (P_{S}) bis zum zweiten Bereich (20) "tot" ist.

3. Drosselklappensteuerungsvorrichtung (1) nach Anspruch 1 oder Anspruch 2, bei der das Fahreranforderungsmittel (30) im ersten Bereich (18) nicht unempfindlich ist, wenn das Geschwindigkeitseinstellmittel (34) nicht eingestellt worden ist.

4. Drosselklappensteuerungsvorrichtung (1) nach einem der vorstehend aufgeführten Ansprüche, bei der das Fahreranforderungsmittel (30) im ersten Bereich (18) vorübergehend nicht unempfindlich ist, wenn das Geschwindigkeitseinstellmittel (34) eingestellt ist und wenn die Pedalposition vom ersten Bereich (18) zum zweiten Bereich (20) und dann zurück in den ersten Bereich (18) bewegt worden ist, und zwar bis zu einem Zeitpunkt, an dem die Pedalposition in die eingestellte Pedalposition (P_{S}) oder darunter zurückgeführt worden ist.

5. Kraftfahrzeug, das eine Drosselklappensteuerungsvorrichtung (1) umfaßt, wobei die Vorrichtung (1) einem der vorstehend aufgeführten Ansprüche entspricht.

6. Kraftfahrzeug nach Anspruch 5, soweit von Anspruch 4 abhängig, bei dem das der Änderung zwischen dem ersten und dem zweiten Bereich (18, 20) zugeordnete Fahreranforderungssignal einer typischen Autobahngeschwindigkeit entspricht.

7. Kraftfahrzeug nach Anspruch 5 oder Anspruch 6, mit einem Automatikgetriebe (33) und einem Mittel (30), mit dem bei einer ausreichend hohen Fahreranforderung eine Kickdown-Rückschaltung bewirkt werden kann, wobei Pedalpositionen (P_{K}), die Fahreranforderungssignalen zugeordnet sind, die ausreichen, um ein Kickdown des Automatikgetriebes (33) zu bewirken, im zweiten Bereich (20) liegen.

8. Kraftfahrzeug nach einem der Ansprüche 5 bis 7, mit einem Katalysator (45), einem Mittel (38) zur Regelung des Kraftstoff/Luft-Gemisches im Zylinder, sowie mit einem Mittel, um das Kraftstoff/Luft-Gemisch bei einer ausreichend hohen Fahreranforderung von einem stöchiometrischen zu einem fetten Gemisch ändern zu können, wobei Pedalpositionen (Pλ), die Fahreranforderungssignalen zugeordnet sind, die ausreichen, um das Kraftstoff/Luft-Verhältnis zum fetten Gemisch hin zu ändern, im zweiten Bereich (20) liegen.

## Revendications

1. Dispositif de commande d'étranglement (1) pour un véhicule à moteur, comprenant: une pédale d'accélérateur (2) pouvant être actionnée par le pied d'un conducteur (8) pour se déplacer entre une position de ralenti (10) et une position au plancher (12), la pédale d'accélérateur (2) présentant une première région de déplacement (18) partant de la position de ralenti (10) suivie par une deuxième région de déplacement (20) allant jusqu'à la position au plancher (12); des moyens de ressort de poussée (14, 16) servant à pousser sur une pédale actionnée (2) pour la renvoyer vers sa position de ralenti (10), lesdits moyens (14, 16) présentant une augmentation de pas lors de la poussée de la première région (18) à la deuxième région (20); un moyen de régulation de vitesse (34) à l'aide duquel un conducteur peut réguler une vitesse de véhicule maximum prédéterminée; et un moyen de demande du conducteur (30) pour générer un signal de demande du conducteur à partir de la position de la pédale, le signal de demande du conducteur augmentant selon la position de 1a pédale à la fois dans la première et dans la deuxième régions (18, 20); le moyen de demande du conducteur (30) étant arrangé pour associer une vitesse souhaitée maximum à une position déterminée de la pédale (P_{S}) à l'intérieur de la première région (18), et une fois qu'un conducteur régule une vitesse de véhicule souhaitée maximum, le moyen de demande du conducteur (30) est insensible à tout changement de la position de la pédale dans la première région (18) de la position déterminée de la pédale (P_{S}) à la deuxième région (20), **caractérisé en ce que** les moyens de ressort de poussée (14, 16) sont actifs et que l'augmentation du pas lors de la poussée se manifeste uniquement lorsque le moyen de régulation de vitesse (34) est utilisé pour réguler une vitesse souhaitée maximum.

2. Dispositif de commande d'étranglement (1) selon la revendication 1, dans lequel le moyen de demande du conducteur (30) est insensible à tout changement de la position de la pédale de la position déterminée de la pédale (P_{S}) à la deuxième région (20).

3. Dispositif de commande d'étranglement (1) selon la revendication 1 ou la revendication 2, dans lequel le moyen de demande du conducteur (30) n'est pas insensible dans la première région (18) lorsque le moyen de régulation de vitesse (34) n'est pas réglé.

4. Dispositif de commande d'étranglement (1) selon l'une quelconque des revendications précédentes, dans lequel le moyen de demande du conducteur (30) n'est temporairement pas insensible dans la première région (18) lorsque le moyen de régulation de vitesse (34) est réglé, et lorsque la position de la pédale a été déplacée de la première région (18) à la deuxième région (20) avant de revenir dans la première région (18), jusqu'au moment où la position de la pédale a été renvoyée dans ou en dessous de la position déterminée de la pédale (P_{S}).

5. Véhicule à moteur, comprenant un dispositif de commande d'étranglement (1), ledit dispositif (1) étant du type défini dans l'une quelconque des revendications précédentes.

6. Véhicule à moteur selon la revendication 5 lorsqu'elle dépend de la revendication 4, dans lequel le signal de demande du conducteur associé au changement entre la première et la deuxième régions (18, 20) correspond à une vitesse d'autoroute typique.

7. Véhicule à moteur selon la revendication 5 ou la revendication 6, comprenant une transmission automatique (33) et des moyens (30) par lesquels la transmission peut être conçue pour rétrograder d'un rapport en cas de demande du conducteur suffisamment appuyée, où les positions de la pédale (P_{K}) associées à des signaux de demande du conducteur suffisants pour entraîner la transmission (33) à rétrograder se trouvent dans la deuxième région (20).

8. Véhicule à moteur selon l'une quelconque des revendications 5 à 7, comprenant un convertisseur catalytique (45), un moyen (38) pour commander le rapport air - carburant du cylindre, et un moyen par lequel le rapport air - carburant peut être changé d'un rapport stoechiométrique à un rapport riche en cas de demande du conducteur suffisamment appuyée, où les positions de la pédale (P_{λ}) associées à des signaux de demande du conducteur suffisants pour entraîner le rapport air - carburant à devenir riche se trouvent dans la deuxième région (20).
